# FASCICULE DE BREVET EUROPEEN

(11) **EP 0 785 502 B1**
(45) Date de publication et mention de la délivrance du brevet: **03.03.1999**
(21) Numéro de dépôt: 96470023.1
(22) Date de dépôt: 11.12.1996
(51) Int. Cl.: G06F 7/72

(54) **Procédé de production d'un paramètre de correction d'erreur associé à la mise en oeuvre d'opérations modulaires selon la méthode de Montgomery**
Verfahren zum Erzeugen eines Fehlerkorrekturparameters bezüglich der Verwendung von modularen Operationen nach der Montgomery-Methode
Method of producing an error correcting parameter associated with the implementation of modular operations according to the Montgomery method

(30) Priorité: 18.01.1996 FR 9600692
(43) Date de publication de la demande: 23.07.1997
(73) Titulaire: STMicroelectronics S.A., 94250 Gentilly (FR)
(72) Inventeur: Monier, Guy, 57000 Metz (FR)
(74) Mandataire: Schmit, Christian Norbert Marie

(56) Documents cités:
- EP-A- 0 601 907
- IEEE JOURNAL ON SELECTED AREAS IN COMMUNICATIONS, vol. 11, no. 5, 1 Juin 1993, pages 761-769, XP000399844 ARAZI B: "DOUBLE-PRECISION MODULAR MULTIPLICATION BASED ON A SINGLE-PRECISION MODULAR MULTIPLIER AND A STANDARD CPU"

## Description

L'invention concerne un procédé de production d'un paramètre de correction d'erreur associé à la mise en oeuvre d'opérations modulaires selon la méthode de Montgomery. Cette méthode permet d'effectuer des calculs modulaires dans un corps fini GF(2ⁿ) (corps de Gallois) sans effectuer de divisions.

Classiquement, les opérations modulaires sur GF(2ⁿ) sont utilisées en cryptographie pour des applications telles que l'authentification de messages, l'identification d'un utilisateur et l'échange de clés. De tels exemples d'applications sont décrits par exemple dans un document D1 consistant en une demande de brevet français publiée sous le numéro 2 679 054.

On trouve dans le commerce des circuits intégrés dédiés à de telles applications, par exemple le produit fabriqué par SGS-THOMSON MICROELECTRONICS S.A. et référencé ST16CF54, bâti autour d'une association de type unité centrale - coprocesseur arithmétique, et dédié à la mise en oeuvre de calculs modulaires. Le coprocesseur utilisé permet de traiter des opérations modulaires, en utilisant la méthode de Montgomery. Il fait l'objet d'une demande de brevet européen, publiée sous la référence 0 601 907 A2, et est illustré figure 1 (cette figure correspondant à la figure 2 de la demande de brevet européen citée) que l'on appellera par la suite le document D2.

L'opération de base, dite P_{field}, consiste, à partir de trois données binaires A (multiplicande), B (multiplieur) et N (modulo), codées sur un nombre entier n de bits, à produire une donnée binaire notée P(A, B)_{N} codée sur n bits, telle que P(A, B)_{N} = A * B * I mod N , avec I donnée binaire codée sur n bits tels que I = 2⁻ⁿ mod N . Pour cela, on considère que les données sont codées sur m mots de k bits, avec m * k = n , et on fournit les mots des données A et B à un circuit de multiplication ayant une entrée série, une entrée parallèle et une sortie série.

Des coprocesseurs spécialisés, par exemple celui du document D2, sont capables de réaliser toutes les opérations modulaires classiques pour un taille données n = m * k bits. De plus, on sait se servir de ces processeurs comme des multiplieurs de k * m' bits, m' étant un entier positif inférieur à m. Cela revient à dire que l'on sait réaliser des opérations élémentaires P_{field} sur des nombres de tailles supérieures à ce que peut normalement traiter le coprocesseur.

On a vu précédemment que P(A, B)_{N} = A * B * I mod N . Où I est en fait une erreur due au découpage en mots de k bits. Si on désire réaliser une opération modulaire, par exemple une multiplication, il est nécessaire de supprimer ce terme d'erreur. Pour cela on réalise une opération P_{field} avec un paramètre de correction d'erreur H valant 2^{2*m*k} lorsque N est codé sur m mots de k bits. Dans un coprocesseur qui peut gérer intégralement les nombres de m * k bits, il est prévu un circuit câblé capable de réaliser rapidement ce calcul. Par contre si on utilise une taille de nombre supérieur à la taille des registres de calcul, le calcul de ce paramètre de correction d'erreur devra s'effectuer sur un processeur plus classique par une méthode identique mais programmée donc plus lente.

L'invention propose de rajouter un registre de taille k * m = K supplémentaire dans le coprocesseur d'arithmétique modulaire qui permettra de réaliser de manière autonome le calcul du paramètre de correction d'erreur H pour des traitements utilisant un modulo N codé sur une taille supérieure à K. L'invention a pour but de réaliser le calcul de ce paramètre H par soustraction successive plus rapidement que le processeur de traitement tout en permettant audit processeur de réaliser d'autres opérations pendant ce temps.

L'invention a pour objet un procédé de production d'un paramètre binaire de correction d'erreur H = 2^{(m1+m2)*k} mod N tel que défini dans la revendication 1 qui, à l'aide d'un coprocesseur possédant des registres d'au plus m * k bits, N étant une donnée binaire codée sur m1 mots de k bits, m1 étant un entier supérieur à m, m, m2 et k étant des entiers non nuls, le coprocesseur comprenant un premier registre à décalage de K1 bits, un deuxième registre à décalage de K2 bits, un troisième registre à décalage de K3 bits et un quatrième registre à décalage de K4 bits, un circuit de soustraction, K1, K2, K3 et K4 étant des entiers multiples de k et tels que K1 + K2 = K3 + K4 = m1 * k , et des moyens de comparaisons, est caractérisé en ce qu'il comporte les étapes suivantes:
E1: chargement des K1 bits de poids faible du modulo N dans le premier registre de K1 bits, chargement des K2 bits de poids immédiatement supérieur du modulo N dans le deuxième registre de K2 bits, initialisation du troisième et du quatrième registres à 0, le contenu des troisième et quatrième registres étant appelé H(0),
E3: production et stockage d'une donnée H'(1) = 2 * (H(0)-N') codée sur K3 + K4 bits, le contenu des premier et deuxième registres étant noté N', par:
   - décalage à droite des premier, deuxième, troisième et quatrième registres, l'entrée du premier registre étant reliée à la sortie du deuxième registre, l'entrée du troisième registre étant reliée à la sortie du quatrième registre,
   - soustraction bit à bit des données sortant des premier et troisième registres dans un circuit de soustraction,
   - décalage du résultat de une unité vers la gauche,
   - comparaison bit à bit de H'(1) avec N' à l'aide de moyens de comparaison,
   - stockage de H'(1) dans les troisième et quatrième registres,
E4: mise en oeuvre d'une boucle indexée par un indice i, i variant de 2 à m2 * k + 1 :
   - si H'(i-1) < N' alors chargement, dans les troisième et quatrième, registres de H'(i) = 2 * H'(i-1) obtenu par un décalage à gauche de une unité de H'(i-1) et comparaison bit à bit de H'(i) avec N',
   - sinon soustraction bit à bit de N' et H'(i-1) dans le circuit de soustraction puis décalage à gauche de une unité du résultat et chargement, dans les troisième et quatrième registres de H'(i) = 2 * (H'(i-1) - N') , et comparaison bit à bit de H'(i) avec N',

Le procédé s'étend également aux cas où L bits de poids fort de N sont égaux à 0, L étant un entier positif ou nul inférieur à k, en modifiant l'indice i de l'étape E4 qui varie de 2 à m2 * k + L + 1 . Il est également possible dans ce cas de rajouter les étapes suivantes:
E2: décalage de L bits vers la gauche des contenus des premier et deuxième registres,
E5: décalage de L bits vers la gauche des contenus des troisième et quatrième registres.

Le fait d'utiliser un seul registre de K bits supplémentaire coûte moins en surface de silicium que de doubler la taille de trois registres principaux de K bits et permet un gain en vitesse considérable pour calculer H malgré l'utilisation de nombre de taille double de celle normalement traitée dans le coprocesseur.

Suivant la même idée, l'invention propose également un coprocesseur d'arithmétique modulaire tel que défini dans la revendication 8, travaillant sur des registres de k et m * k = K bits, m et k étant des entiers supérieurs à 1, caractérisé en ce qu'il comporte un circuit spécifique de calcul d'un paramètre de correction d'erreur H = 2^{2*K+K'} mod N , où H et N sont codés sur un même nombre de bits supérieur à K.

La particularité d'un tel circuit spécifique étant qu'il comporte entre autre:
- un premier registre à décalage de K bits destiné à recevoir les K bits de poids faible de N,
- un deuxième registre à décalage de K bits destiné à recevoir les K bits de poids fort de N,
- un troisième registre à décalage de K bits destiné à recevoir les K bits de poids faible d'un résultat intermédiaire,
- un quatrième registre à décalage de K bits destiné à recevoir les K bits de poids fort du résultat intermédiaire,
- un premier circuit de soustraction,
- des moyens de comparaison adaptés pour comparer le résultat de la soustraction avec le contenu desdits premier et deuxième registres, lesdits moyens de comparaison comportant un deuxième circuit de soustraction, un circuit de retardement, et un circuit de mémorisation.

L'invention sera mieux comprise et d'autres avantages apparaîtront au cours de la description qui va suivre et qui est à lire conjointement aux dessins annexés et parmi lesquels:
- la figure 1 représente un coprocesseur de l'art antérieur,
- la figure 2 représente un coprocesseur modifié selon l'invention,
- la figure 3 représente ce même coprocesseur de manière simplifiée.

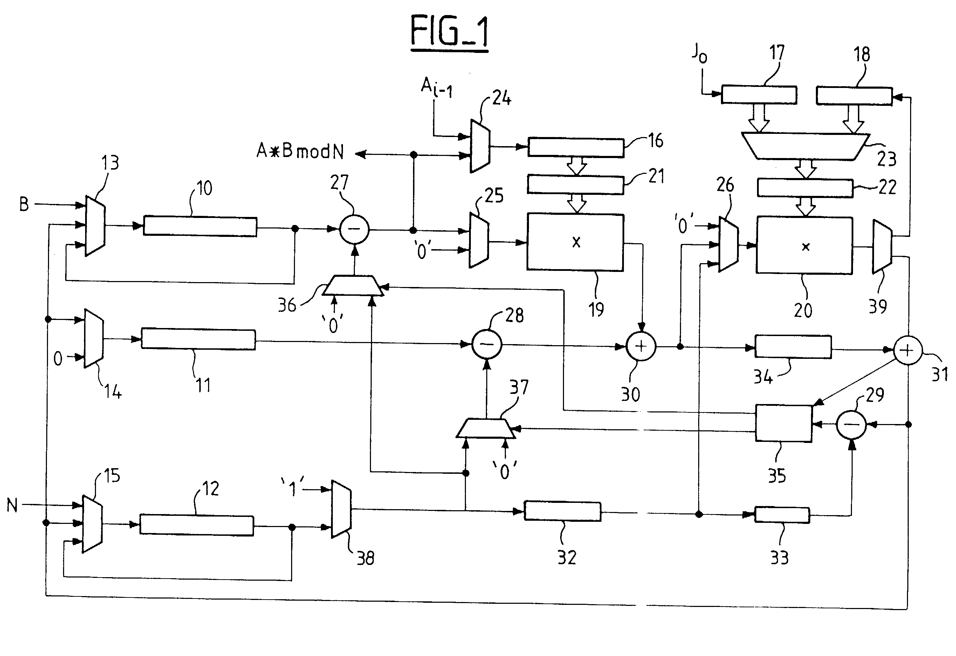

La figure 1 représente un coprocesseur d'arithmétique modulaire.

Il comprend :
- trois registres à décalage 10, 11 et 12 à entrée et sortie série. Ces registres comportent chacun un même nombre K de cellules, avec K = m * k . Ces registres pourront être subdivisables, par exemple en registres de K/2 cellules, et en registres de k bits pour les registres 10 et 12.
- des multiplexeurs 13, 14 et 15 sont placés respectivement devant les registres 10, 11 et 12. On placera également des multiplexeurs devant les subdivisions si celles ci existent.
- trois registres 16, 17 et 18 comportant chacun k cellules. Les registres 16 et 17 et 18 sont des registres à sortie parallèle et entrée série.
- deux circuits de multiplication 19 et 20 comprenant chacun une entrée série, une entrée parallèle et une sortie série. L'entrée parallèle du circuit de multiplication 19 est reliée à la sortie du registre 16 par le biais d'une bascule de mémorisation 21 de k cellules. L'entrée parallèle du circuit de multiplication 20 est reliée à l'une des sorties des registres 17 ou 18, par le biais d'une bascule de mémorisation 22 de k cellules. Cette bascule 22 est elle-même reliée à l'une des sorties des registres 17 et 18, par le biais d'un multiplexeur à deux entrées parallèles et une sortie parallèle.
- des multiplexeurs 24, 25, 26, 36, 37 et 38.
- un démultiplexeur 39.
- des circuits de soustraction série 27, 28 et 29.
- des circuits d'addition série 30 et 31.
- des circuits de retardement 32, 33 et 34 pour retarder de k temps de cycle la propagation de données binaires.
- un circuit de mémorisation 35 de stockage de résultat de comparaison.

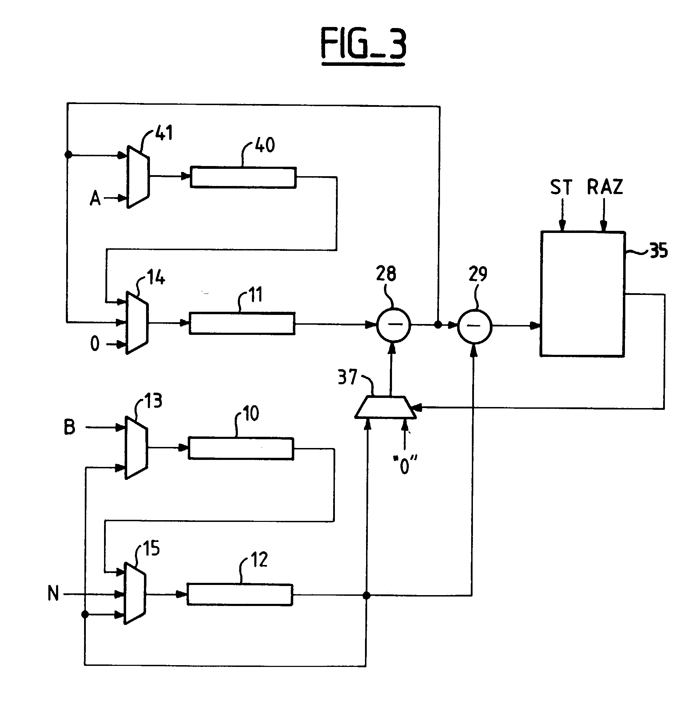

Pour plus de détails, on peut se reporter au document D2 et en particulier à la figure 3 de ce document D2, et aux extraits de la description s'y rapportant : page 15, ligne 54 à page 16, ligne 13, et page 17, ligne 50 à page 18, ligne 55.

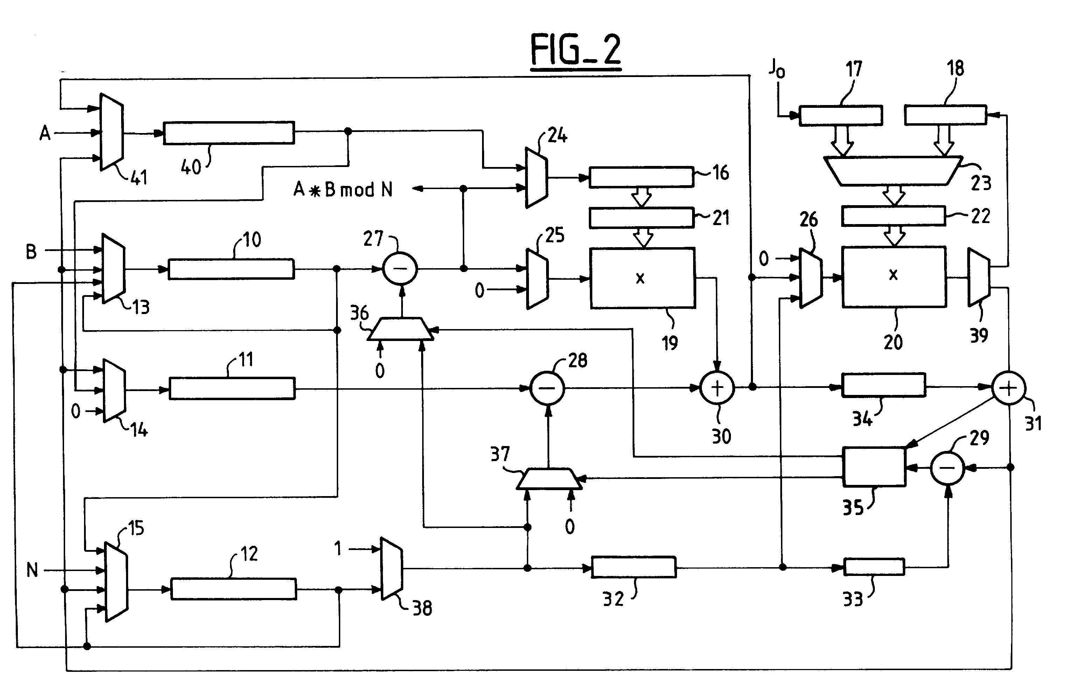

Pour réaliser l'invention, des modifications ont été apportées au coprocesseur de la figure 1. Plusieurs modes de réalisations étant possibles, nous avons représenté une réalisation préférée visant à rajouter audit coprocesseur le moins d'éléments possible. Ainsi on peut voir sur la figure 2 les éléments rajoutés suivant:
- un registre 40 de K bits, ayant une sortie reliée au multiplexeur 24, ce registre 40 servant accessoirement de buffer à une donnée A lors d'opérations modulaires, pour cette particularité non développée dans ce présent document, il conviendra que ce registre 40 soit subdivisable en registres de taille multiple de k bits (il en sera de même pour les autres registres 10, 11 et 12),
- un multiplexeur 41 à trois entrées et une sortie, la sortie de ce multiplexeur 41 étant reliée à l'entrée du registre 40.

Des modifications de certains éléments de la figure 1 ont également été faites afin de diminuer le temps de calcul. Ainsi les circuits de retardement 32, 33 et 34 ont un mode de fonctionnement où le retard qu'ils provoquent est nul.

D'autres connexions ont été rajoutées figure 2 sur certains éléments; l'homme de métier n'aura aucun mal à faire le rapprochement entre les connexions de la figure 2 et celles de la figure 3 qui représente le même coprocesseur de manière simplifiée. Pour arriver au dessin de la figure 3, il suffit que les multiplexeurs 25 et 26 soit positionnés sur l'entrée connectée à un niveau logique 0.

La figure 3 comportant moins d'éléments permet plus facilement de comprendre le fonctionnement de l'invention. En effet, le circuit de la figure 2 peut réaliser les mêmes fonctions que le circuit de la figure 1, à savoir opération P_{field}, multiplication modulaire, exponentiation modulaire, ou autre. Ces fonctions ne sont pas décrites dans la présente demande de brevet car elles sont déjà connues. On s'intéressera donc uniquement au procédé de l'invention pour lequel la figure 3 suffit amplement. L'homme de métier peut sans problème transposer les explications de fonctionnement relatives à la figure 3 sur le schéma de la figure 2. Ainsi le circuit de cette figure 3 comporte:
- quatre registres à décalage de K bits 10, 11, 12, et 40 ayant une entrée et une sortie série, le poids faible étant rangé vers la sortie ce qui revient lors d'un décalage à droite à faire entrer un nouveau bits de poids fort et à faire "sortir" l'ancien bit de poids faible,
- quatre multiplexeur 13, 14, 15, et 41 ayant leurs sorties respectivement connectées aux entrées des registres 10, 11, 12, et 40, la sortie du registre 12 étant reliée à des premières entrées des multiplexeurs 13 et 15, la sortie du registre 10 étant reliée à une deuxième entrée du multiplexeur 15, la sortie du registre 40 étant reliée à une première entrée du multiplexeur 14, une deuxième entrée du multiplexeur 14 étant reliée à un 0 logique, une deuxième entrée du multiplexeur 13 étant reliée à une borne d'entrée B, une troisième entrée du multiplexeur 15 étant reliée à une borne d'entrée N, une première entrée du multiplexeur 41 étant reliée à une borne d'entrée A, les entrées de sélection de ces multiplexeurs 13, 14, 15, et 41 n'étant pas représentées,
- un autre multiplexeur 37 ayant deux entrées de signal et une entrée de sélection et une sortie, la première entrée étant reliée à un 0 logique, la deuxième entrée étant reliée à la sortie du registre 12,
- deux circuit de soustraction 28 et 29 ayant deux entrées et une sortie série, la première entrée du circuit 28 étant reliée à la sortie du registre 11, la deuxième entrée du circuit 28 étant reliée à la sortie du multiplexeur 37, la sortie du circuit 28 étant reliée à une deuxième entrée du multiplexeur 14 et à une troisième entrée du multiplexeur 41, la première entrée du circuit 29 étant reliée à la sortie du registre 12,la sortie du circuit 28 étant reliée à la première entrée du circuit 29,
- un circuit de mémorisation 35 ayant une entrée de signal, une entrée de remise à zéro, une entrée de mémorisation et une sortie, l'entrée de signal étant reliée à la sortie du circuit 29, la sortie étant reliée à l'entrée de sélection du multiplexeur 37, l'entrée de remise à zéro étant reliée à un signal RAZ, l'entrée de mémorisation recevant un signal ST.

L'homme de métier remarquera que le circuit de mémorisation 35 et le circuit de soustraction 29 constituent des moyens de comparaison entre deux fois le résultat du circuit de soustraction 28 et le contenu des registres 12 et 10. En effet les circuits de soustraction 28 et 29 provoque des retard de 1 cycle d'horloge chacun, le fait d'effectuer simultanément les deux soustractions revient à considérer un décalage de 1 bit vers la gauche en sortie du circuit de soustraction 28, ce qui correspond également à une multiplication par deux.

Certaines connexions ont volontairement été omises afin de simplifier le schéma. Ainsi, indifféremment, on choisira des éléments qui fonctionnent de manière synchrone en utilisant un même signal d'horloge ou bien on préférera des éléments qui fonctionnent de manière asynchrone afin d'avoir une surface de silicium la plus petite possible. Dans les deux cas, on utilisera des signaux de décalage à droite pour les registres 10, 11, 12, et 40. Pour les décalages à gauche, on utilise des décalages à droite en nombre complémentaire. Il est également possible d'utiliser des registres capables d'effectuer des décalages bi-directionnels mais ceux-ci ont une taille un peu plus importante.

Pour la suite de la description, les connexions qui sont indiquées correspondent à différents positionnement des multiplexeurs. L'homme de métier pourra alors noter les différents positionnements à effectuer pour réaliser la synchronisation du coprocesseur.

Pour réaliser le calcul d'un paramètre de correction d'erreur H = 2^{4*K} mod N , dans le cas d'une multiplication de A * B mod où A, B et N sont codés sur 2 * K bits, le bit de poids fort de N étant égal à 1, avec un tel circuit, il convient de réaliser les étapes suivantes:
E1: chargement et initialisation:
   - chargement des K bits de poids faible du modulo N dans le registre 12, chargement des K bits de poids fort du modulo N dans le registre 10, le chargement de ces registres 10 et 12 pouvant s'effectuer simultanément à l'aide des bornes d'entrée B et N ou en série à partir de la borne d'entrée B,
   - initialisation des registres 11 et 40 à 0, cette initialisation pouvant s'effectuer à l'aide d'une entrée de forçage des registres 11 et 40 ou par propagation d'un 0 dans ces registres 11 et 40 pendant le chargement des registres 10 et 12, le contenu des registres 11 et 40 étant appelé H(0),
   - initialisation des autres éléments du coprocesseur, en mettant à zéro les retenues des circuits de soustraction 28 et 29, en forçant à zéro le circuit de mémorisation 35 par l'intermédiaire du signal RAZ;
E2: production et stockage d'une donnée H(1) = 2 * (H(0)-N) codée sur 2 * K bits par:
   - décalage à droite de 2 * K bits des quatre registres 10, 11, 12, et 40, l'entrée du registre 12 étant reliée à la sortie du registre 10, l'entrée du registre 11 étant reliée à la sortie du registre 40,
   - soustraction bit à bit des données sortant des registres 11 et 12, correspondant à la soustraction H(0) - N,
   - décalage du résultat de une unité vers la gauche, correspondant à une multiplication par deux, le décalage à gauche étant fictif, le poids faible du registre 11 devenant ainsi un zéro logique (le zéro logique provenant de l'initialisation du circuit de soustraction 28),
   - comparaison bit à bit de H(1) avec N pendant les décalages à droite, la comparaison s'effectuant à l'aide de moyens de comparaison,
   - stockage de H(1) dans les registres 11 et 40;
E3: mise en oeuvre d'une boucle indexée par un indice i, i variant de 2 à 2 * K + 1:
   - génération du signal ST au début de chaque boucle afin de mémoriser la comparaison précédente dans le circuit de mémorisation 35 et de remettre à zéro les circuits de soustraction 28 et 29,
   - si H(i-1) < N , alors chargement dans les registres 11 et 40 de H(i) = 2 * H(i-1) obtenu par un décalage à gauche de une unité de H(i-1) après avoir réalisé un décalage de 2 * K bits pour pouvoir comparer bit à bit H(i) avec N,
   - sinon soustraction bit à bit de N et H(i-1) par décalage à droite de 2 * K bits puis décalage à gauche de une unité du résultat et chargement, dans les troisième et quatrième registres, de H(i) = 2 * (H(i-1) - N), et comparaison bit à bit de H(i) avec N;
E4: sortie du résultat par une borne de sortie.

La borne de sortie servant à sortir le résultat peut être celle située en sortie du registre 10, dans ce cas là, il est possible de gagner du temps en chargeant H(K) dans le registre 10 afin de pouvoir le sortir sans avoir à effectuer un décalage complet.

Pour réaliser la comparaison de H(i) et N, de nombreux circuits et de nombreuses méthodes sont disponibles. Dans le procédé préféré, on procède ainsi:
- multiplication par deux du résultat sortant du circuit de soustraction 28 par retard de un cycle et ajout d'un zéro dans ce circuit de soustraction 28, le signal ST remettant à zéro le contenu du circuit de soustraction 28 à chaque fin de comparaison,
- soustraction de N à H(i) par l'intermédiaire du circuit de soustraction 29,
- la retenue de la soustraction étant mémorisée par le circuit de mémorisation à chaque envoie de signal ST.

La réalisation complète de ce procédé de calcul de paramètre de correction d'erreur utilise, en réalisant le plus grand nombre d'opération simultanément, (2 * K)² cycles d'horloge, en utilisant une horloge synchrone pour tous les éléments. Pour K = 512, cela représente un peu plus d'un million de cycles d'horloge.

Un tel procédé ne s'applique en fait qu'à des modulo N codés sur 2 * K bits et dont le bit de poids fort est égal à un. Cependant il est tout à fait possible d'étendre la méthode pour des cas où le modulo N est codé sur une taille inférieure à 2 * K bits en ayant le bit de poids fort égal à un. Toutefois si le modulo N est d'une taille inférieur à K bits, il est préférable d'utiliser un autre procédé plus adapté à une taille plus petite et qui sera donc plus rapide. Il est tout à fait possible, par exemple, de réaliser le même procédé en utilisant des registres divisés en deux, ce qui permet de diviser environ par quatre le temps d'exécution.

Pour pouvoir étendre le procédé à un modulo N de taille 2 * K, N ayant ses L bits de poids le plus fort égal à 0, L étant inférieur à K, on modifie le procédé comme suit:
E1: chargement et initialisation:
   - chargement des K bits de poids faible du modulo N dans le registre 12, chargement des K bits de poids fort du modulo N dans le registre 10, ceci correspondant à une multiplication par 2^{L}, le chargement de ces registres 10 et 12 pouvant s'effectuer simultanément à l'aide des bornes d'entrée B et N ou en série à partir de la borne d'entrée B,
   - initialisation des registres 11 et 40 à 0, cette initialisation pouvant s'effectuer à l'aide d'une entrée de forçage des registres 11 et 40 ou par propagation d'un 0 dans ces registres 11 et 40 pendant le chargement des registres 10 et 12, le contenu des registres 11 et 40 étant appelé H'(0),
   - initialisation des autres éléments du coprocesseur, en mettant à zéro les circuits de soustraction 28 et 29, en forçant à zéro le circuit de mémorisation par l'intermédiaire du signal RAZ;
E2: Décalage à gauche de L bits des registres 10 et 12, le contenu de ces registre étant par la suite appelé N',
E3: production et stockage d'une donnée H'(1) = 2 * (H'(0)-N') codée sur 2 * K bits par:
   - décalage à droite de 2 * K bits des quatre registres 10, 11, 12, et 40, l'entrée du registre 12 étant reliée à la sortie du registre 10, l'entrée du registre 11 étant reliée à la sortie du registre 40,
   - soustraction bit à bit des données sortant des registres 11 et 12, correspondant à la soustraction H'(0) - N',
   - décalage du résultat de une unité vers la gauche, correspondant à une multiplication par deux, le décalage à gauche étant fictif, le poids faible du registre 11 devenant ainsi un zéro logique,
   - comparaison bit à bit de H'(1) avec N' pendant les décalages à droite et à gauche, la comparaison s'effectuant à l'aide du circuit de soustraction 29 et du circuit de mémorisation 35,
   - stockage de H'(1) dans les registres 11 et 40;
E4: mise en oeuvre d'une boucle indexée par un indice i, i variant de 2 à 2 * K + L + 1 :
   - génération du signal ST au début de chaque boucle afin de mémoriser la comparaison précédente dans le circuit de mémorisation 35 et de remettre à zéro les circuits de soustraction 28 et 29,
   - si H'(i-1) < N' alors chargement dans les registres 11 et 40 de H'(i) = 2 * H'(i-1) obtenu par un décalage à gauche de une unité de H'(i-1) après avoir réalisé un décalage de 2 * K bits pour pouvoir comparer bit à bit H'(i) avec N',
   - sinon soustraction bit à bit de N' et H'(i-1) par décalage à droite de 2 * K bits puis décalage à gauche de une unité du résultat et chargement du résultat dans les troisième et quatrième registres de H'(i) = 2 * (H'(i-1) - N') , et comparaison bit à bit de H'(i) avec N';
E5: décalage à droite de 2 * K - L bits, ce décalage correspondant à une division par 2^{L} en ignorant les 2 * K - L bits de poids faible du dernier résultat, et sortie du résultat H par une borne de sortie.

L'étape E2 peut se réaliser en fait de deux façons différentes. Il est possible de remplacer le décalage à gauche de L bits par un décalage à droite de 2 * K + 1 - L bits. Il est également possible de confondre cette étape avec l'étape E1 afin de la réaliser pendant le chargement de la donnée. C'est à dire que l'on charge L fois 0 suivi de K - L bits de poids faible de N dans le registre 12 et les K bits de poids supérieur de N dans le registre 10.

Les décalage de l'étape E5 peuvent également être confondus avec la sortie de H. Il suffit dans ce cas d'ignorer les L premiers bits qui sortent du coprocesseur.

Un tel procédé utilise un nombre total de cycles d'horloge de (2 * K + L) * (2 * K), en effectuant le maximum d'opérations simultanément.

Les différents calculs de H qui ont été développés précédemment ne couvrent que les cas particuliers où A et B sont codés sur 2 * K bits. En fait si ces données sont de taille inférieure à 2 * K bits, il est toujours possible de se ramener à 2 * K bits. Des méthodes de calculs optimisées permettent d'effectuer un nombre d'itération de la méthode de Montgomery qui dépend de la taille réelle des différentes opérandes A, B et N. Le fait de changer le nombre d'itérations utilisées par la méthode de Montgomery modifie l'erreur associée. Dans tous les cas envisageable, on a un paramètre de correction d'erreur H = 2^{x} mod N , x étant un entier.

L'invention utilisant des registres de taille variable multiple de k bits, l'erreur est donc toujours une puissance de 2^{k} mod N. Une généralisation de la méthode est possible pour N codé sur m1 * k bits et ayant L bits de poids fort égaux à 0, L étant un entier positif inférieur à k, H = 2^{(m1+m2)*k} mod N , m1 étant un entier supérieur à m, et m2 étant un entier positif non nul. Ainsi le registre 12 doit être considéré comme un registre de K1 bits, le registre 10 doit être considéré comme un registre de K2 bits, le registre 11 doit être considéré comme un registre de K3 bits, le registre 40 doit être considéré comme un registre de K4 bits. K1, K2, K3, K4 sont des entiers multiples de k et tels que K1 + K2 = K3 + K4 = m1 * k .

Le procédé généralisé comporte les étapes suivantes:
E1: chargement des K1 bits de poids faible du modulo N dans le registre 12 de K1 bits, chargement des K2 bits de poids immédiatement supérieur du modulo N dans le registre 10 de K2 bits, initialisation des registres 11 et 40 à 0, le contenu des registres 11 et 40 étant appelé H(0),
E2: décalage de L bits vers la gauche des contenus des registres 10 et 12, le contenu de ces registres 10 et 12 étant noté N'
E3: production et stockage d'une donnée H'(1) = 2 * (H(0)-N') codée sur K3 + K4 bits par:
   - décalage à droite des registres 10, 11, 12 et 40, l'entrée du registre 12 étant reliée à la sortie du registre 10, l'entrée du registre 11 étant reliée à la sortie du registre 40,
   - soustraction bit à bit des données sortant des et registres 11 et 12 dans un circuit de soustraction 28,
   - décalage du résultat de une unité vers la gauche,
   - comparaison bit à bit de H'(1) avec N' à l'aide de moyens de comparaison 29 et 35,
   - stockage de H'(1) dans les registres 11 et 40,
E4: mise en oeuvre d'une boucle indexée par un indice i, i variant de 2 à m2 * k + L + 1 :
   - si H'(i-1) < N' alors chargement dans les registres 11 et 40 de H'(i) = 2 * H'(i-1) obtenu par un décalage à gauche de une unité de H'(i-1) et comparaison bit à bit de H'(i) avec N',
   - sinon soustraction bit à bit de N' et H'(i-1) dans le circuit de soustraction 28 puis décalage à gauche de une unité du résultat et chargement du résultat dans les registres 11 et 40 de H'(i) = 2 * (H'(i-1) - N') , et comparaison bit à bit de H'(i) avec N',
E5: décalage de L bits vers la gauche des contenus des registres 11 et 40,
E6: sortie du résultat H contenu dans les registres 11 et 40.

En ce qui concerne les modalités de réalisation de ce procédé, ce sont les mêmes que celles l'on a utilisées précédemment. Certaines remarques sont à faire.

L'étape E2 peut être confondue avec l'étape E1, c'est à dire que lors du chargement de N, on charge d'abord L fois 0 puis la donnée N. Il est également possible d'effectuer K1 + K2 + 1 - L décalages à droite à la place de L décalages à gauche. Cette étape E2 de plus n'est pas nécessaire lorsque L = 0. De même l'étape E5 peut être réaliser lors de la sortie de H pendant l'étape E6, il suffit pour cela d'ignorer les L premiers bits qui sortent. De plus cette étape est inutile si L = 0. Dans le cas où L = 0, il est possible de supprimer L dans tout le procédé.

L'étape de sortie E6 n'est pas obligatoire si l'on désire utiliser H dans le coprocesseur immédiatement après sa production.

Le concept de base de l'invention résidant dans la mise en oeuvre d'un quatrième registre de K bits, l'homme de métier pourra aisément trouver d'autre variantes du schéma sans s'éloigner de l'idée générale de l'invention. En effet, il a été préféré un mode de réalisation qui présente l'avantage de nécessiter peu de modifications par rapport au coprocesseur représenté sur la figure 1. Néanmoins il est aussi possible d'adapter un mode de réalisation utilisant d'autres ressources communes.

On notera que les connexions de la sortie du circuit 29 à la troisième entrée du multiplexeur 14, et également de la sortie du registre 12 à la deuxième entrée du multiplexeur 13 permettent de shunter les registres 40 et 10. Ces registres shuntés autorisent la réalisation du même procédé appliqué à des modulo N de tailles inférieures à N en utilisant que deux des quatres registres.

## Revendications

1. Procédé de production d'un paramètre binaire de correction d'erreur H = 2^{(m1+m2)*k} mod N associé à la mise en oeuvre d'opérations modulaires selon la méthode de Montgomery, à l'aide d'un coprocesseur d'arithmétique modulaire possédant des registres d'au plus m * k bits, N étant une donnée binaire codée sur m1 mots de k bits, m1 étant un entier supérieur à m, m, m2 et k étant des entiers non nuls, le coprocesseur comprenant un premier registre (12) à décalage de K1 bits, un deuxième registre (10) à décalage de K2 bits, un troisième registre (11) à décalage de K3 bits et un quatrième registre (40) à décalage de K4 bits, un circuit de soustraction (28), K1, K2, K3 et K4 étant des entiers multiples de k et tels que K1 + K2 = K3 + K4 = m1 * k, et des moyens de comparaisons (29 et 35), ledit procédé étant caractérisé en ce qu'il comporte les étapes suivantes:
E1: chargement des K1 bits de poids faible du modulo N dans le premier registre (12) de K1 bits, chargement des K2 bits de poids immédiatement supérieur du modulo N dans le deuxième registre (10) de K2 bits, initialisation du troisième et du quatrième registres (11 et 40) à 0, le contenu des troisième et quatrième registres (11 et 40) étant appelé H(0),
E3: production et stockage d'une donnée H'(1) = 2 * (H(0)-N') codée sur K3 + K4 bits, le contenu des premier et deuxième registres (10 et 12) étant noté N', par:
- décalage à droite des premier, deuxième, troisième et quatrième registres (10, 11, 12 et 40), l'entrée du premier registre (12) étant reliée à la sortie du deuxième registre (10), l'entrée du troisième registre (11) étant reliée à la sortie du quatrième registre (40),
- soustraction bit à bit des données sortant des premier et troisième registres (11 et 12) dans un circuit de soustraction (28),
- décalage du résultat de une unité vers la gauche,
- comparaison bit à bit de H'(1) avec N' à l'aide de moyens de comparaison (29 et 35),
- stockage de H'(1) dans les troisième et quatrième registres (11 et 40),
E4: mise en oeuvre d'une boucle indexée par un indice i, i variant de 2 à m2 * k + 1:
- si H'(i-1) < N' alors chargement dans les troisième et quatrième registres (11 et 40) de H'(i) = 2 * H'(i-1) obtenu par un décalage à gauche de une unité de H'(i-1) et comparaison bit à bit de H'(i) avec N',
- sinon soustraction bit à bit de N' et H'(i-1) dans le circuit de soustraction (28) puis décalage à gauche de une unité du résultat et chargement du résultat dans les troisième et quatrième registres (11 et 40) de H'(i) = 2 * (H'(i-1) - N'), et comparaison bit à bit de H'(i) avec N',

2. Procédé selon la revendication 1 caractérisé en ce que L bits de poids fort de N sont égaux à 0, L étant un entier positif ou nul inférieur à k, et en ce que l'indice i de l'étape E4 varie de 2 à m2 * k + L + 1.

3. Procédé selon la revendication 2 caractérisé en ce qu'il comprend les étapes suivantes:
E2: décalage de L bits vers la gauche des contenus des premier et deuxième registres (10 et 12),
E5: décalage de L bits vers la gauche des contenus des troisième et quatrième registres (11 et 40).

4. Procédé selon l'une des revendications 1 à 3, caractérisé en ce que la sortie du premier registre (12) est reliée à l'entrée du deuxième registre (10) pendant les étapes E3 et E4.

5. Procédé selon l'une des revendication 1 à 4, caractérisé en ce que le chargement des premier et deuxième registres (10 et 12) s'effectue simultanément en utilisant 2 bornes d'entrée, chacune des entrées desdits registres (10 et 12) étant reliée à l'une des bornes d'entrée.

6. Procédé selon l'une des revendications 1 à 5, caractérisé en ce que le chargement des premier et deuxième registres (10 et 12) s'effectue simultanément en utilisant une borne d'entrée, la sortie du deuxième registre (10) étant reliée à l'entrée du premier registre (12), l'entrée du deuxième registre (10) étant reliée à la borne d'entrée.

7. Procédé selon l'une des revendications 1 à 6, caractérisé en ce que les premier, deuxième, troisième et quatrième registres (10, 11, 12 et 40) sont de taille variable et en ce que leur taille maximale est de m * k bits.

8. Coprocesseur d'arithmétique modulaire travaillant sur des registres de k et m * k = K bits, m et k étant des entiers supérieurs à 1, caractérisé en ce qu'il comporte un circuit spécifique de calcul d'un paramètre de correction d'erreur H associé à la mise en oeuvre d'opérations modulaires selon la méthode de Montgomery, et en ce que le circuit spécifique comporte:
- un premier registre (12) à décalage de K bits destiné à recevoir les K bits de poids faible de N,
- un deuxième registre (10) à décalage de K bits destiné à recevoir les K bits de poids fort de N,
- un troisième registre (11) à décalage de K bits destiné à recevoir les K bits de poids faible d'un résultat intermédiaire,
- un quatrième registre (40) à décalage de K bits destiné à recevoir les K bits de poids fort du résultat intermédiaire,
- un premier circuit de soustraction (28) série comportant des première et deuxième entrées et une sortie,
- des moyens pour stocker le résultat de soustraction fourni en série par la sortie du circuit de soustraction dans les troisième et quatrième registres,
- des moyens de comparaison (29, 34 et 35) adaptés pour comparer le résultat de la soustraction avec le contenu desdits premier et deuxième registres (10 et 12),
- des moyens pour fournir en série le contenu des troisième et quatrième registres sur la première entrée du circuit de soustraction,
- des moyens pour fournir en série, en fonction du résultat de la comparaison, soit le contenu des premier et deuxième registres, soit des zéro sur la deuxième entrée du circuit de soustraction.

9. Coprocesseur selon la revendication 8, caractérisé en ce que les moyens de comparaison comportent:
- un deuxième circuit de soustraction (29),
- un circuit de retardement (34),
- un circuit de mémorisation (35).

10. Coprocesseur selon l'une des revendications 8 ou 9, caractérisé en ce que les premier, deuxième, troisième et quatrième registres (10, 11, 12 et 40) sont subdivisables en registre de taille multiple de k bits.

## Patentansprüche

1. Verfahren zum Erzeugen eines binären Fehlerkorrekturparameters H = 2^{(m1 + m2) · k} mod N bei der Durchführung von modularen Operationen nach dem Montgomery-Verfahren mit Hilfe eines modularen arithmetischen Coprozessors, der Register mit höchstens m · k Bits umfaßt, wobei N ein Datenwert ist, der binär codiert ist auf m1 Worte mit k Bits, wobei m1 eine ganze Zahl ist, die größer als m ist, m, m2 und k ganze Zahlen sind, die nicht Null sind, der Coprozessor ein erstes Schieberegister (12) mit K1 Bits, ein zweites Schieberegister (10) mit K2 Bits, ein drittes Schieberegister (11) mit K3 Bits und ein viertes Schieberegister mit K4 Bits, einen Subtraktionsschaltkreis (28), wobei K1, K2, K3 und K4 ganze Vielfache von k sind, so daß K1 + K2 = K3 + K4 = m1 · k, und Vergleichsvorrichtungen (29 und 35) hat, und das Verfahren dadurch gekennzeichnet ist, daß es die folgenden Schritte umfaßt:
E1: Ablegen von K1 Bits mit kleinem Gewicht von Modulo N in dem ersten Register (12) mit K1 Bits, Ablegen von K2 Bits mit unmittelbar höherem Gewicht von Modulo N in dem zweiten Register (10) mit K2 Bits, Initialisierung des dritten und des vierten Registers (11 und 40) auf Null, wobei der Inhalt des dritten und vierten Registers (11 und 40) H(0) genannt wird,
E3: Erzeugen und Abspeichern eines Datenwertes H'(1) = 2 · (H(0)-N'), codiert auf K3 + K4 Bits, wobei der Inhalt des ersten und zweiten Registers (10 und 12) N' genannt wird, durch:
- Verschieben nach rechts des ersten, zweiten, dritten und vierten Registers (10, 11, 12 und 40), wobei der Eingang des ersten Registers (12) mit dem Ausgang des zweiten Registers (10) verbunden ist, der Eingang des dritten Registers (11) mit dem Ausgang des vierten Registers (40) verbunden ist,
- Bit-für-Bit-Subtraktion von Daten, die von dem ersten und dritten Register (11 und 12) ausgegeben werden, in einem Subtraktionsschaltkreis (28),
- Verschieben des Ergebnisses um eine Einheit nach links,
- Bit-für-Bit-Vergleich von H'(1) mit N' mit Hilfe von Vergleichsmitteln (29 und 35),
- Abspeichern von H'(1) in dem dritten und vierten Register (11 und 40),
E4: Durchführen einer Schleife, die mit einem Index i indiziert ist, wobei i zwischen 2 und m2 · k + 1 variiert:
- wenn H'(i-1) < N' Ablegen in dem dritten und vierten Register (11 und 40) von H'(i) = 2 · H'(i-1), was erhalten wurde durch ein Verschieben nach links um eine Einheit von H'(i-1) und Hit-für-Bit-Vergleich von H'(i) mit N',
- andernfalls Bit-für-Bit-Subtraktion von N' und H'(i-1) in den Subtraktionsschaltkreis (28), dann Verschieben nach links um eine Einheit des Ergebnisses und Ablegen des Ergebnisses in dem dritten und vierten Register (11 und 40) von H'(i) = 2 · (H'(i-1) - N') und Bit-für-Bit-Vergleich von H'(i) mit N'.

2. Verfahren nach Anspruch 1,
dadurch gekennzeichnet, daß
L Bits mit hohem Gewicht von N gleich Null sind, wobei L eine positive ganze Zahl ist, die nicht Null ist und kleiner als k ist, und daß der Index i in Schritt E4 zwischen 2 und m2 · k + L + 1 variiert.

3. Verfahren nach Anspruch 2,
dadurch gekennzeichnet, daß
es die folgenden Schritte umfaßt:
E2: Verschieben der Inhalte des ersten und zweiten Registers (10 und 12) um L Bits nach links,
E5: Verschieben der Inhalte des dritten und vierten Registers (11 und 40) um L Bits nach links.

4. Verfahren nach einem der Ansprüche 1 bis 3,
dadurch gekennzeichnet, daß
der Ausgang des ersten Registers (12) während der Schritte E3 und E4 mit dem Eingang des zweiten Registers (10) verbunden ist.

5. Verfahren nach einem der Ansprüche 1 bis 4,
dadurch gekennzeichnet, daß
das Laden des ersten und zweiten Registers (10 und 12) simultan erfolgt unter Verwendung von zwei Eingangsanschlüssen, wobei jeder der Eingänge der Register (10 und 12) mit einem der Eingangsanschlüsse verbunden ist.

6. Verfahren nach einem der Ansprüche 1 bis 5,
dadurch gekennzeichnet, daß
das Laden des ersten und zweiten Registers (10 und 12) simultan erfolgt unter Verwendung eines Eingangsanschlusses, wobei der Ausgang des zweiten Registers (10) mit dem Eingang des ersten Registers (12) verbunden ist, und der Eingang des zweiten Registers (10) mit dem Eingangsanschluß verbunden ist.

7. Verfahren nach einem der Ansprüche 1 bis 6,
dadurch gekennzeichnet, daß
das erste, zweite, dritte und vierte Register (10, 11, 12 und 40) eine variable Größe hat und daß seine maximale Größe m · k Bits beträgt.

8. Modularer arithmetischer Coprozessor für eine Bearbeitung mit Registern mit k und m · k = K Bits, wobei m und k ganze Zahlen größer 1 sind,
dadurch gekennzeichnet, daß
er einen speziellen Rechenschaltkreis für einen Fehlerkorrekturparameter H in Zusammenhang mit der Durchführung von modularen Operationen nach dem Montgomery-Verfahren umfaßt und daß der spezielle Schaltkreis umfaßt:
- ein erstes Schieberegister (12) mit K Bits zum Empfangen von K Bits niedrigen Gewichts von N,
- ein zweites Schieberegister (10) mit K Bits zum Empfangen der K Bits hohen Gewichts von N,
- ein drittes Schieberegister (11) mit K Bits zum Empfangen der K Bits niedrigen Gewichts eines Zwischenergebnisses,
- ein viertes Schieberegister (40) mit K Bits zum Empfangen der K Bits hohen Gewichts des Zwischenergebnisses,
- einen ersten seriellen Subtraktionsschaltkreis (28) mit einem ersten und einem zweiten Eingang und einem Ausgang,
- Vorrichtungen zum Abspeichern des Ergebnisses der Subtraktion, das seriell über den Ausgang des Subtraktionsschaltkreises in dem dritten und vierten Register ausgegeben wird,
- Vergleichsvorrichtungen (29, 34 und 35), die ausgelegt sind, das Ergebnis der Subtraktion mit dem Inhalt des ersten und zweiten Registers (10 und 12) zu vergleichen,
- Vorrichtungen zum seriellen Ausgeben des Inhalts des dritten und vierten Registers an den ersten Eingang des Subtraktionsschaltkreises,
- Vorrichtungen zum seriellen Ausgeben entweder des Inhalts des ersten und zweiten Registers oder von Nullen an den zweiten Eingang des Subtraktionsschaltkreises in Abhängigkeit von dem Vergleichsergebnis.

9. Coprozessor nach Anspruch 8,
dadurch gekennzeichnet, daß
die Vergleichsvorrichtung umfaßt:
- einen zweiten Subtraktionsschaltkreis (29),
- einen Verzögerungsschaltkreis (34),
- einen Speicherschaltkreis (35).

10. Coprozessor nach einem der Ansprüche 8 oder 9,
dadurch gekennzeichnet, daß
das erste, zweite, dritte und vierte Register (10, 11, 12 und 40) unterteilbar sind in Register mit einer vielfachen Größe von k Bit.

## Claims

1. Method of producing a binary error correction parameter H = 2^{(m1-m2)*k} mod N associated with the implementation of modular operations according to the Montgomery method, using a modular arithmetic coprocessor having registers of at most m * k bits, N being a binary data item coded in ml words of k bits, ml being an integer greater than m, m, m2 and k being non-nil integers, the coprocessor comprising a first K1-bit shift register (12), a second K2-bit shift register (10), a third K3-bit shift register (11) and a fourth K4-bit shift register (40), a subtraction circuit (28), K1, K2, K3 and K4 being integers which are multiples of k and are such that K1 + K2 = K3 + K4 + m1 * k, and comparison means (29 and 35), the said method being characterised in that it includes the following steps:
E1: loading the K1 least significant bits of the modulo N into the first K1-bit register (12), loading the K2 bits of immediately greater weight of the modulo N into the second K2-bit register (10), initialising the third and fourth registers (11 and 40) to 0, the content of the third and fourth registers (11 and 40) being termed H(0),
E3: producing and storing a data item H'(1) = 2 * (H(0) - N') coded in K3 + K4 bits, the content of the first and second registers (10 and 12) being denoted N', by:
- shifting to the right the first, second, third and fourth registers (10, 11, 12 and 40), the input of the first register (12) being connected to the output of the second register (10), the input of the third register (11) being connected to the output of the fourth register (40),
- subtracting the data coming from the first and third registers (11 and 12) bit by bit in a subtraction circuit (28),
- shifting the result by one unit to the left,
- comparing H'(1) with N' bit by bit using comparison means (29 and 35),
- storing H'(1) in the third and fourth registers (11 and 40),
E4: implementing a loop indexed by an index i, i varying from 2 to m2 * k + 1:
- if H'(i-1) < N', then loading, into the third and fourth registers (11 and 40), H'(i) = 2 * H'(i-1) obtained by shifting H'(i-1) to the left by one unit and comparing H'(i) with N' bit by bit,
- otherwise subtracting N' and H'(i-1) bit by bit in the subtraction circuit (28) and then shifting the result to the left by one unit and loading the result of H'(i) = 2 * (H'(i-1) - H') into the third and fourth registers (11 and 40) and comparing H'(i) with N' bit by bit.

2. Method according to Claim 1, characterised in that L most significant bits of N are equal to 0, L being a positive or nil integer less than k, and in that the index i of step E4 varies from 2 to m2 * k + L + 1.

3. Method according to Claim 2, characterised in that it comprises the following steps:
E2: shifting the contents of the first and second registers (10 and 12) by L bits to the left,
E5: shifting the contents of the third and fourth registers (11 and 40) by L bits to the left.

4. Method according to one of Claims 1 to 3, characterised in that the output of the first register (12) is connected to the input of the second register (10) during steps E3 and E4.

5. Method according to one of Claims 1 to 4, characterised in that the loading of the first and second registers (10 and 12) is effected simultaneously using two input terminals, each of the inputs of the said registers (10 and 12) being connected to one of the input terminals.

6. Method according to one of Claims 1 to 5, characterised in that the loading of the first and second registers (10 and 12) is effected simultaneously using one input terminal, the output of the second register (10) being connected to the input of the first register (12), the input of the second register (10) being connected to the input terminal.

7. Method according to one of Claims 1 to 6, characterised in that the first, second, third and fourth registers (10, 11, 12 and 40) are of variable size and in that their maximum size is m * k bits.

8. Modular arithmetic coprocessor working on registers of k and m * k + K bits, m and k being integers greater than 1, characterised in that it has a specific circuit for calculating an error correction parameter H associated with the implementation of modular operations according to the Montgomery method, and in that the specific circuit includes:
- a first K-bit shift register (12) intended to receive the K least significant bits of N,
- a second K-bit shift register (10) intended to receive the K most significant bits of N,
- a third K-bit shift register (11) intended to receive the K least significant bits of an intermediate result,
- a fourth K-bit shift register (40) intended to receive the K most significant bits of the intermediate result,
- a first serial subtraction circuit (28) having first and second inputs and an output,
- means for storing the subtraction result supplied serially by the output of the subtraction circuit in the third and fourth registers,
- comparison means (29, 34 and 35) adapted to compare the result of the subtraction with the content of the said first and second registers (10 and 12),
- means for serially supplying the content of the third and fourth registers at the first input of the subtraction circuit,
- means for serially supplying, according to the result of the comparison, either the content of the first and second registers or zeros at the second input of the subtraction circuit.

9. Coprocessor according to Claim 8, characterised in that the comparison means include:
- a second subtraction circuit (29),
- a delay circuit (34),
- a memory circuit (35).

10. Coprocessor according to one of Claims 8 or 9,
characterised in that the first, second, third and fourth registers (10, 11, 12 and 40) can be subdivided into registers with a size which is a multiple of k bits.
